# EUROPEAN PATENT APPLICATION

(11) **EP 4 831 127 A1**
(43) Date of publication of application: **28.10.2026**
(21) Application number: 25171562.9
(22) Date of filing: 22.04.2025
(51) Int. Cl.: C01C 1/18

(54) **COMPUTER-IMPLEMENTED CONTROL OF AMMONIUM NITRATE PRODUCTION**

(71) Applicant: Yara International ASA, 0277 Oslo (NO)
(72) Inventor: Laurent, Bernhard, 5170 Lustin (BE)
(74) Representative: AWA Sweden AB

(57) **Abstract**

The present disclosure provides a computer-implemented method for controlling ammonium nitrate production, comprising mixing a stream of ammonia and a stream of nitric acid to form a biphasic composition, the biphasic composition comprising an aqueous solution and an exhaust gas, the aqueous solution comprising ammonium nitrate and the exhaust gas comprising water, ammonium nitrate and ammonia, condensing the exhaust gas to form a process condensate, measuring online variables of the process condensate, estimating the exhaust gas composition based on the measured online variables, estimating the value of at least one variable of the biphasic composition based on the estimated exhaust gas composition, and adjusting at least one process parameter such that the estimated value is within a desired range, preferably at a desired value.

## Description

### Field of the disclosure

The present disclosure is related to the field of production of ammonium nitrate. More specifically, the present disclosure concerns computer-implemented control of ammonium nitrate production.

### Background information

Ammonium nitrate, with chemical formula NH₄NO₃, is an inorganic salt. Ammonium nitrate is widely used today as an agricultural fertilizer, as an explosive for civil applications, such as mining or blasting, and in the treatment of ores, such as titanium ores. Ammonium nitrate is conventionally produced by mixing and reacting liquid nitric acid with liquid or gaseous ammonia, and optionally water. The resulting reaction is highly exothermic, and the mixture formed is highly corrosive and inhomogeneous. The reaction results in a biphasic composition including ammonium nitrate in aqueous solution, and a waste product in the form of an exhaust gas. The exhaust gas is condensed in a condenser, coupled to the neutralizer, to form a process condensate.

In order to control ammonium nitrate production and obtain a yield as high as possible, it is important to maintain a constant ammonia to nitric acid ratio throughout the reaction. Conventionally, a slight excess in ammonia is used to maintain an alkaline environment. To maintain the aforementioned ratio as close as possible to a desired value, or at least within a desired range, different parameters can be controlled during ammonium nitrate production. Such controlled parameters include the flow and concentration of the nitric acid fed into the neutralizer and / or the flow of ammonia fed into the neutralizer. Controlling these parameters requires measuring and knowing the exact composition within the neutralizer, or at least measuring one or more composition variables, within the neutralizer.

However, the measuring of these one or more composition variables may suffer from various issues, such as variability, inhomogeneity, and a short sensor lifespan, due to the corrosive environment within the neutralizer.

Therefore, there is a need to develop robust and reliable methods to estimate one or more composition variables, in order to control the production of ammonium nitrate.

### Summary of the disclosure

It was surprisingly found that the process condensate formed from the exhaust gas can be used to estimate one or more composition variables, which can be utilized to control the ammonium nitrate production process.

### Brief description of the figures

The following description of the figure of a specific embodiment of a system according to the present disclosure is only given by way of example and is not intended to limit the present explanation, its application, or its use. In the figure, identical reference numerals refer to the same or similar parts and features.
Figure 1 schematically shows a computer-implemented method for controlling the production of ammonium nitrate production according to the present disclosure.
Figure 2A schematically shows a system for controlling ammonium nitrate production according to the present disclosure.
Figure 2B schematically shows a part of an ammonium nitrate plant including the system of Fig. 2A.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention. All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

In a first aspect, the present disclosure provides a computer-implemented method for controlling ammonium nitrate production, the method comprising mixing a stream of ammonia and a stream of nitric acid to form a biphasic composition, the biphasic composition comprising an aqueous solution and an exhaust gas, the aqueous solution comprising ammonium nitrate and the exhaust gas comprising water, ammonium nitrate and ammonia; and condensing the exhaust gas to form a process condensate; the method further comprising measuring online variables of the process condensate; estimating the exhaust gas composition based on the measured online variables; estimating a value of at least one variable of the biphasic composition based on the estimated exhaust gas composition; and adjusting at least one process parameter such that the estimated value of the variable is within a desired range.

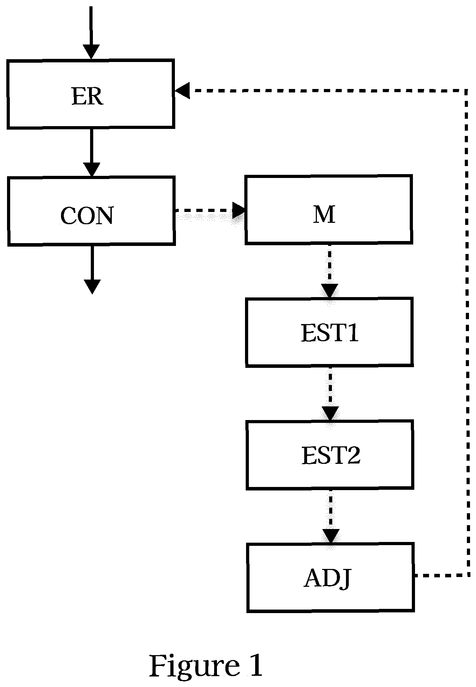

At present there are no reliable methods for online measuring of variables of the biphasic composition formed during the exothermic reaction of ammonia and nitric acid. The reason lies in the harsh process conditions and the inhomogeneity occurring during the aforementioned exothermic reaction. Without such reliable methods for providing online measurement data, it is difficult to control the exothermic reaction and thereby, the ammonia nitrate production. However, with reference to figure 1, it has now been found that it is possible to control ammonia nitrate production based on the exhaust gas resulting from the reaction of ammonia and nitric acid, ER. The key to this control is to measure, M, online variables of the process condensate, resulting from condensation, CON, of the exhaust gas. These measurements are performed online and can be used to estimate the exhaust gas composition, EST1. The composition of the exhaust gas, or exhaust gas composition, includes the substances forming the exhaust gas. Based on the estimated exhaust gas composition, a variable of the biphasic composition, formed during the exothermic reaction, can be estimated, EST2. A process parameter can then be controlled, ADJ, to ensure that the latter estimate is maintained within a desired range, or preferably, at or around a desired value. With this control loop, indicated schematically in figure 1 by striped arrows and comprising measuring, estimating, and adjusting, the ammonium nitrate production can be optimized, for instance to give a high yield.

Referring to figure 1, the exothermic reaction ER results in an aqueous solution, comprising ammonium nitrate, and in an exhaust gas, comprising water, ammonia, and ammonium nitrate. The mixing of ammonia and nitric acid and the subsequent exothermic reaction, ER, may take place in a neutralizer. The neutralizer is included in an ammonium nitrate production plant, detailed further hereinbelow. A stream of ammonium and a stream of nitric acid are mixed in the neutralizer and their reaction results in the aforementioned biphasic composition, including an aqueous solution and waste, in the form of an exhaust gas.

The aqueous solution comprises ammonium nitrate. Although knowing the composition of the aqueous solution provides some information about the biphasic composition, it was found that this information is not sufficient to control the ammonium nitrate production , e.g., in order to achieve optimal yield.

The exhaust gas, on the other hand, comprises water, ammonia, and ammonium nitrate. The exhaust gas is condensed into a process condensate, CON. As detailed further hereinbelow, the condensing may take place in a condenser. The condenser is included in the ammonium nitrate production plant, detailed hereinbelow. A stream of exhaust gas exits a neutralizer and enters the condenser, which is fluidly and directly connected to the neutralizer. The process condensate CON comprises water, free ammonia and ammonium nitrate. The process condensate is an aqueous solution. Furthermore, the process condensate may be at a relatively low temperature, for example ranging from 40 to 70°C, or from 50 to 60 °C. The temperature of the process condensate is low, as compared to the conditions inside the neutralizer.

In general, properties of aqueous solutions can be measured using online sensors, i.e., sensors that measure a chemical or physical property within the devices, vessels, or pipes in which the aqueous solution flows, or is stored. The devices, vessels, or pipes are included in an ammonium nitrate plant. The measured properties may, for instance be the temperature, density, viscosity, pH, and / or electrical conductivity of the aqueous solution. Additionally, online sensors that measure the concentration of ammonia, or nitrate ions are also available. These sensors are, however, not reliable enough to monitor the conditions during the exothermic reaction of ammonia with nitric acid.

As detailed above and with continued reference to figure 1, it was found that it is possible to estimate the exhaust gas composition based on measurements M of online process variables of the process condensate. Based on the estimated exhaust gas composition, EST1, a variable of the biphasic composition can be estimated, EST2, and a control parameter can be adjusted, ADJ. Upon adjusting the control parameter, the value of the estimated variable, EST2, may remain within a desired range. Preferably, the estimated variable may remain at or around a desired value. Hence, the online control of the ammonium nitrate production process can be enhanced. Furthermore, the efficiency of the ammonium nitrate synthesis process can also be increased.

In some embodiments, estimating of the exhaust gas composition, EST1, and of the composition variable, EST2, is performed by a controller, and adjusting the process parameter, ADJ, is performed by at least one actuator receiving instructions from the controller.

In a further embodiment, mixing is performed in a neutralizer and condensing is performed in a condenser, the condenser being fluidly and directly connected to the neutralizer.

In some embodiments, the online variables of the process condensate comprise the pH and the conductivity of the process condensate. In some embodiments, estimating the exhaust gas composition, EST1, is based on a first model and on the measured online variables; wherein the first model is provided by receiving a plurality of pH and conductivity measurement data of aqueous solutions comprising known amounts of ammonium nitrate and ammonia, and performing a statistical analysis on the received measurement data, thereby identifying the first model.

The exhaust gas comprises droplets of aqueous solution comprising ammonium nitrate and of ammonia. These droplets are carried by the stream of exhaust gas exiting the neutralizer and entering the condenser. Since ammonium nitrate is an inorganic salt comprising a weak base and a strong acid, the ammonium nitrate content of the droplets influences the pH of the condensate formed in the condenser. The pH of the condensate formed in the condenser is thereby dependent on both the amount of ammonia and on the amount of ammonium nitrate comprised in the exhaust gas. Consequently, measuring only the pH of the process condensate is insufficient to estimate the composition of the exhaust gas.

However, it has been found that it is possible to measure an additional process variable that depends on the ammonia and/or ammonium nitrate content and thereby on the composition of the exhaust gas. By measuring the electroconductivity of the process condensate, in addition to measuring the pH of the process condensate, sufficient information is provided to determine the ammonia and ammonium nitrate content of the process condensate and thereby to estimate the composition of the exhaust gas, EST1.

Ammonia is a weak base, which can form ammonium ions in aqueous solutions, so the electroconductivity of the process condensate depends on the ammonia content of the process condensate, and on the amount of ammonia that is protonated into ammonium (ions). Ammonium nitrate is a salt, so the electroconductivity of the process condensate is influenced by its ammonium nitrate content.

It has also been found that ammonium nitrate is the only salt in the process condensate . Consequently, the ammonium nitrate content in the process condensate can be determined from the measurement of the electroconductivity of the process condensate.

Means and methods for measuring the electroconductivity of an aqueous solution are well known in the field. Two main variants are available: the 2-AC bipolar method, or the electromagnetic induction method. Probes and sensors are available for various aqueous solutions and process conditions.

A first model may be obtained by collecting a plurality of pH and conductivity data of aqueous solutions comprising known amounts of ammonium nitrate and ammonia, processing the plurality of pH and conductivity data and performing a statistical analysis for identifying a first model for predicting the composition of the exhaust gas on the basis of pH and conductivity of the process condensate.

In some embodiments, the statistical analysis comprises a polynomial regression, a support vector regression, and/or a logarithmic regression. Alternatively, or additionally, the statistical analysis may be based on splines, wavelets, or radial basis functions.

The pH and conductivity data may be provided for aqueous solutions having a wide range of ammonia and ammonium nitrate concentrations to ensure that the first model is valid over a wide range of possible regular operating conditions arising during the production of ammonia nitrate, preferably over all possible operating conditions. The electroconductivity and pH of an aqueous solution vary with the temperature of the solution. Consequently, the data may also be provided for aqueous solutions at different temperatures, in particular at temperatures occurring during condensation of an exhaust gas in a condenser under regular operation conditions. Knowing online variables of the process condensate such as ammonium nitrate content, ammonia content, temperature, pH, and conductivity, allows the development of a first model that links the variables of the biphasic composition with the process variables measured in the plant.

Processing the plurality of pH and conductivity data and / or performing a statistical analysis may be performed by a controller, detailed hereinbelow. Alternatively, processing and / or statistical analysis may be performed by a separate computing device, such as an on-site computing device, or a remote computing device. The computing device may comprise one or more processing units, such as central processing units and / or graphical processing unit.

The pH and conductivity data may be used as inputs in different models, preferably different statistical models. The first model may be the model that generates values of the ammonia content and ammonium nitrate content with the least errors, or least deviations, compared to the actual ammonia content and actual ammonium nitrate content of the aqueous solutions.

Once the first model has been determined, an estimate of the composition of the exhaust gas, EST1, can be obtained. The estimate can be obtained in real time, using the values of the measured online variables of the process condensate. The first may comprise a mathematical model configured to use the online measured process variables to estimate the composition of the exhaust gas. Advantageously, by using the first model, the composition of the exhaust gas stream can be estimated without needing to wait for offline analysis of the exhaust gas stream, or of the process condensate.

Based on the estimate of the exhaust gas composition, the value of the at least one variable of the biphasic composition can be estimated. The estimate of the at least one variable of the biphasic composition can be performed by various methods. For example, mathematical models embedded in a software available today, such as Aspen Plus^{®}, can estimate the at least one variable based on the estimated composition of the exhaust gas stream. Alternatively, a second model can be developed to estimate the at least one variable, as detailed hereinbelow.

When the estimated value of the variable of the biphasic composition falls outside a desired range, or more preferably deviates from a desired value, at least one process parameter may be adjusted, ADJ. Adjusting the process parameter leads to a change in the exhaust gas composition and consequently, in the process condensate. This change is reflected in a change in the values of the measured online variables, M, of the process condensate and, consequently, in a change in the estimate of the exhaust gas composition, EST1, and in the estimate of the variable of the biphasic composition. Thereby, the ammonium nitrate production process is controlled.

By using the first model, taking offline measurements of the at least one variable of the biphasic composition may no longer be necessary. Therefore, the manual taking of samples, often involving increased safety risks, for performing offline experiments in a lab, may thus be dispensed with. Hence, less time and resources are needed for controlling the ammonium nitrate production process according to the present disclosure.

In some embodiments, the at least one variable of the biphasic composition is the pH of the aqueous solution, or a NH₃/HNO₃ ratio, in particular a molar of NH₃/HNO₃ ratio. Preferably, the at least one variable of the biphasic composition is at least one variable of the biphasic solution as comprised in the neutralizer.

The reaction for the production of ammonium nitrate is equimolar, according to Equation 1:

NH₃ + HNO₃ → NH₄NO₃ Equation 1

However, due to some particular reasons, such as safety, it may be preferred to maintain a molar ratio of NH₃/HNO₃ above 1. Preferably the molar ratio may range from 1.0 to 1.5, from 1.0 to 1.4, from 1.0 to 1.3, from 1.0 to 1.2, from 1.0 to 1.1, from 1.0 to 1.01, or from 1.0 to 1.001. In some plants, optimum conditions are obtained when ammonia is in a very small excess, for example an excess of less than 10 mol%, less than 1 mol%, or even less than 0.5 mol%.

In some embodiments, the at least one process parameter is selected from the group consisting of a volumetric flow rate of an the ammonia stream, a volumetric flow rate of a the nitric acid stream, a temperature of an the ammonia stream, a temperature of the nitric acid stream, a pressure of an the ammonia stream, and a pressure of a the nitric acid stream, and, optionally, a nitric acid concentration of nitric acid stream.

In some embodiments, the stream of ammonia is a gaseous stream of ammonia. Generally, a gaseous stream of ammonia is considered to be safer to handle than a liquid stream of ammonia stream. Alternatively, however, the stream of ammonia may be a liquid stream of ammonia.

In some embodiments, the stream of nitric acid may comprise a stream of an aqueous solution comprising nitric acid.

In some embodiments, estimating the value of the at least one variable of the biphasic composition is based on a second model. The second model may preferably be provided by receiving, over a time interval during the production of ammonium nitrate, a plurality of measurement data of the exhaust gas composition; receiving, at discrete moments within the time interval, a plurality of measurement data of the at least one variable of the biphasic composition; and performing a statistical analysis on the received plurality of measurement data of the exhaust gas composition and of the measurement data of the at least one variable of the biphasic composition, thereby identifying the second model.

Over the time interval, a plurality of measurement data relating to the composition of the exhaust gas stream may be obtained. The measurement data may be offline measurement data, for example, as provided by laboratory analysis. Alternatively, or additionally, the measurement data may include online measurement data, provided by online analysis. Analysis, either online or offline, may include gas chromatography, mass spectrometry, and / or Fourier transform infrared spectroscopy. The measurement data may be stored in a data storage unit, such as a hard drive, a server, a flash drive, a USB stick, or a cloud service. Alternatively, the measurement data may be directly sent to a processing unit, for example a central processing unit or a graphical processing unit. The processing unit may comprise a data storing unit for storing the received measurement data before processing said data.
Furthermore, within the first period of time, a plurality of measurement data of the at least one variable of the biphasic composition is retrieved. The measurement data provide an accurate values for the variable of the biphasic composition. Such data may be used for calibration of and / or determination of an accurate second model. Generally, it is difficult to accurately determine the value of variables of the biphasic composition using a real-time sensor. Preferably, variables of the biphasic composition may therefore be determined offline, from a plurality of samples taken from the exhaust gas at different times, using one or more devices. The measurement data of the at least one variable of the biphasic composition may be stored in a data storage unit, such as a hard drive, a server, a flash drive, a USB stick, or a cloud service. Alternatively, the measurement data may be directly sent to a processing unit, for example a central processing unit or a graphical processing unit. The processing unit may comprise a data storage unit for storing the received measurement data, before processing said data.

The plurality of measurement data of the exhaust gas stream and the variable of the biphasic composition may be sampled over appropriate time intervals, such as 1-minute, 5-minute, 10-minute, 15-minute or 30-minute time intervals. The measurement data may then be time-averaged, e.g., by averaging the data over a large number of samples. The timer intervals over which the exhaust gas stream is sampled may be equal or longer than the time intervals over which the variable of the biphasic composition is sampled.

The plurality of measurement data related to the exhaust gas stream and the variable of the biphasic composition may then be processed in a computing device comprising one or more processing units. The computing device may be a device physically present in an ammonium nitrate plant. Alternatively, the computing device may be a remote server, i.e., a server not physically present in the plant, and accessed remotely.

Processing the measurement data may comprise performing statistical analysis to identify a second model. The second model may then be used for predicting the at least one composition variable on the basis of the composition of the exhaust gas stream. Advantageously, once the second model has been identified, further measurement data are not needed, thereby avoiding the cumbersome process of sampling, analyzing, and data processing and significantly improving efficiency.

In some embodiments, the statistical analysis comprises a polynomial regression, a support vector regression, and/or a logarithmic regression. Alternatively, or additionally, the statistical analysis may be based on splines, wavelets, or radial basis functions.

The second model may be a mathematical model configured to use the exhaust gas composition as input, in order to estimate the at least one composition variable. By using the second model, the at least one composition variable can be estimated without needing to wait for analysis of the exhaust gas composition. Hence, the online control of the production process can be enhanced, and thereby the efficiency of the ammonium nitrate production process can be increased.

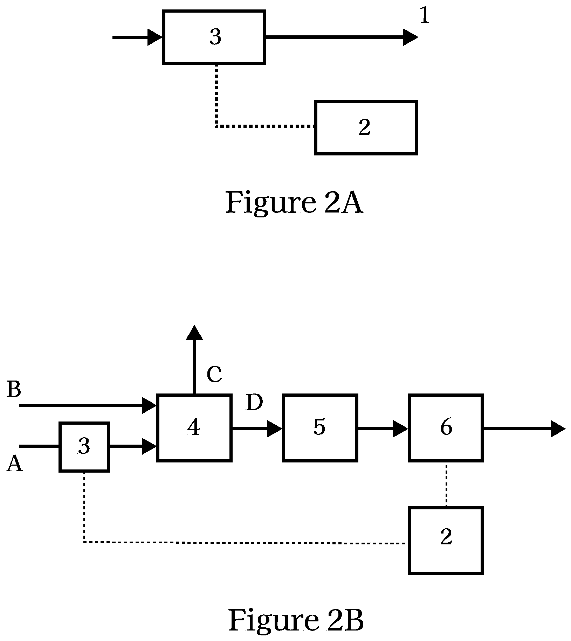

In another aspect, with reference to figure 2A, the present disclosure concerns a system 1 for controlling an ammonium nitrate production process. In figure 2A process flows are schematically indicated with thick arrows and control connections are schematically indicated with striped lines. The direction of the arrows represents the direction of the process flows between the different units of the plant. The system 1 includes at least one controller 2. The controller may be a programmable logic controller, a distributed control system or the like. The controller 2 may include at least one central processing unit or a graphic processing unit, an internal memory, an I/O module, a power supply, and a communication interface. The system 1 further includes at least one actuator 3. The actuator 3 may be a pneumatic actuator, an electrical actuator, a hydraulic actuator, a magnetic actuator, or a mechanical actuator. The controller 2 is connected to the at least one actuator 3 by a wired connection or a wireless connection.

The controller 2 is configured to receive measurement data of online variables of a process condensate and to estimate an exhaust gas composition on the basis of the received measurement data. The online variables may, for example, include the pH and conductivity of the process condensate. The measurement data may be received directly from one or more sensors monitoring the process condensate, or from a data storage unit receiving measurement data from the one or more sensors.

The controller 2 is further configured to estimate at least one variable of a biphasic composition based on the estimated exhaust gas composition. Estimating the exhaust gas composition and estimating the variable of the biphasic composition may be performed by the same controller 2. Alternatively, the system 1 includes a plurality of controllers 2 and estimating the exhaust gas composition and estimating the variable of the biphasic composition may be performed by different controllers.

The controller 2 is further configured to adjust at least one process parameter by engaging the at least one actuator 3, such that the estimated variable is within a desired range, preferably at or around a desired value. The at least one process parameter may include of a volumetric flow rate of an ammonia stream, a volumetric flow rate of a nitric acid stream, a temperature of the ammonia stream, a temperature of the nitric acid stream, a pressure of the ammonia stream, and a pressure of the nitric acid stream.
In a further aspect, with reference to figure 2B, the present disclosure also concerns an ammonium nitrate production plant. In figure 2B process flows are schematically indicated with thick arrows and control connections are schematically indicated with striped lines. The plant includes the system 1 for controlling an ammonium nitrate production process, as detailed hereinabove, including a controller 2 and at least one actuator 3. The plant further includes a neutralizer 4 for mixing a stream of ammonia A and a stream of nitric acid B. Upon mixing a reaction takes place, forming a biphasic solution C and an exhaust gas D. The plant further includes a condenser 5 , for condensing an exhaust gas D originating from the neutralizer 4, the condenser 5 being fluidly and directly connected to the neutralizer 4. Thereto, the plant includes pipes, valves and vessels, as usual in the art. The controller 2 and the at least one actuator 3 are coupled to the neutralizer 4 and / or the condenser 5.
The plant may further include one or more sensors 6. The controller 2 is connected to the one or more sensors 6. Preferably, the one or more sensors 6 may be installed downstream of the condenser 5. The controller 2 may receive measurement data from the one or more sensors 6. The one or more sensors 6 may include a pH sensor and a conductivity sensor.

Based on the estimated variable of the biphasic composition, a process parameter, such as the flow of ammonia A, can be modified via the at least one actuator 3, to ensure that the estimated variable remains within a pre-determined range, or at a predetermined value. The actuator 3 may, for example, comprise a flow valve, or a valve control unit.

In a further aspect, the present disclosure concerns a computer system. The computer system comprises ate least a processor and a memory coupled to the processor. The memory stores a computer program that, when executed by the processor, causes the processor to perform the method as described hereinabove.

In a further aspect, the present disclosure concerns a non-transitory computer-readable medium storing a program that, when executed by a processor, causes the processor to perform the method as described hereinabove.

In a further aspect, the present disclosure concerns a computer program product comprising computer program code that, when executed by a processor, causes the processor to perform the method as described hereinabove.

### Example

In a laboratory, a series of aqueous solutions with a fixed ammonia content and varying ammonium nitrate content (from 0.0001 mol/L to 0.5 mol/L) were prepared to simulate solutions comprised in a condensate as produced in an ammonium nitrate production process. Such a condensate may be produced in a condenser.

The pH and electroconductivity of these laboratory solutions were measured using a pH-meter and a conductivity probe. It was found that the conductivity is linearly dependent on the ammonium nitrate concentration, and the pH is logarithmically dependent on the ammonium nitrate concentration.

Based on these findings, a first model to determine the ammonium nitrate and ammonia content of a composition was obtained. The first model is implemented in an ammonium nitrate production process.

## Claims

1. A computer-implemented method for controlling ammonium nitrate production, the method comprising:
- mixing a stream of ammonia and a stream of nitric acid to form a biphasic composition, the biphasic composition comprising an aqueous solution and an exhaust gas the aqueous solution comprising ammonium nitrate and the exhaust gas comprising water, ammonium nitrate and ammonia; and
- condensing the exhaust gas to form a process condensate,
the method further comprising:
- measuring online variables of the process condensate;
- estimating the exhaust gas composition based on the measured online variables;
- estimating a value of at least one variable of the biphasic composition based on the estimated exhaust gas composition; and
- adjusting at least one process parameter such that that the estimated value is within a desired range.

2. The method of claim 1, wherein the online variables of the process condensate comprise the pH and the conductivity of the process condensate.

3. The method of claim 1 or 2, wherein estimating the exhaust gas composition is based on a first model and on the measured online variables, and wherein the first model is provided by:
- receiving a plurality of pH and conductivity measurement data of aqueous solutions comprising known amounts of ammonium nitrate and ammonia; and
- performing a statistical analysis on the received measurement data, thereby identifying the first model.

4. The method of claim 3, wherein the statistical analysis comprises polynomial regression, support vector regression, and/or logarithmic regression.

5. The method of any of claims 1 to 4, wherein estimating of the exhaust gas composition, and of the variable of the biphasic composition, is performed by a controller, and wherein adjusting the process parameter is performed by at least one actuator receiving instructions from the controller.

6. The method of any of claims 1 to 5, wherein the at least one variable of the biphasic composition comprises the pH of the aqueous solution or a NH₃/HNO₃ratio of the aqueous solution, in particular a molar NH₃/HNO₃ ratio of the aqueous solution.

7. The method of any one of claims 1 to 6, wherein the at least one process parameter is selected from the group consisting of a volumetric flow rate of the ammonia stream, a volumetric flow rate of the nitric acid stream, a temperature of the ammonia stream, a temperature of the nitric acid stream, a pressure of the ammonia stream, and a pressure of the nitric acid stream.

8. The method of any one of claims 1 to 7, wherein estimating the value of the at least one variable of the biphasic composition is based on a second model, and wherein the second model is provided by:
- receiving, over a time interval during ammonium nitrate production, a plurality of measurement data of the exhaust gas composition;
- receiving, at discrete moments within the time interval, a plurality of measurement data of the variable of the biphasic composition;
- performing statistical analysis on the received plurality of measurement data of the exhaust gas composition and the variable of the biphasic composition, thereby identifying the second model.

9. A system for controlling ammonium nitrate production, the system comprising:
a. a controller and an at least one actuator, wherein the controller is configured to:
- receive measurement data of online variables of a process condensate;
- estimate an exhaust gas composition on the basis of the received measurement data;
- estimate the value of at least one variable of a biphasic composition based on the estimated exhaust gas composition; and
- adjust at least one process parameter by engaging the at least one actuator, such that the estimated value is within a desired range.

10. An ammonium nitrate production plant comprising
- a neutralizer for mixing a stream of ammonia and a stream of nitric acid;
- a condenser for condensing an exhaust gas from the neutralizer into a process condensate, the condenser being fluidly and directly connected to the neutralizer; and
- the system of claim 9, wherein the controller and the at least one actuator are coupled to the neutralizer and / or the condenser.

11. An ammonium nitrate product produced by the method of any of claims 1 to 8 in the plant of claim 10.

12. A computer system comprising a processor, a memory coupled to the processor, wherein the memory stores a computer program that, when executed by the processor, causes the processor to perform the method of any one of claims 1 to 8.

13. A non-transitory computer-readable medium storing a program that, when executed by a processor, causes the processor to perform the method of any one of claims 1 to 8.

14. A computer program product comprising computer program code that, when executed by a processor, causes the processor to perform the method of any one of claims 1 to 8.
